# FASCICULE DE BREVET EUROPEEN

(11) **EP 3 558 729 B1**
(45) Date de publication et mention de la délivrance du brevet: **11.11.2020**
(21) Numéro de dépôt: 17828750.4
(22) Date de dépôt: 21.12.2017
(51) Int. Cl.: B60J 1/20, B60J 7/00

(54) **DISPOSITIF D'OCCULTATION POUR PAVILLON DE VÉHICULE AUTOMOBILE, À ÉLÉMENTS DE MAINTIEN ET DE GUIDAGE DE LA TOILE RENFORCÉS, PAVILLON ET PROCÉDÉ DE FABRICATION CORRESPONDANTS.**
VORRICHTUNG ZUR ABSCHIRMUNG DES DACHS EINES KRAFTFAHRZEUGES MIT VERSTÄRKTEN BLENDENHALTE- UND FÜHRUNGSELEMENTEN, ENTSPRECHENDE DÄCHER UND ENTSPRECHENDES VERFAHREN ZUR HERSTELLUNG
DEVICE FOR SCREENING A MOTOR VEHICLE ROOF, HAVING REINFORCED BLIND-RETAINING AND BLIND-GUIDING ELEMENTS, CORRESPONDING ROOFS AND CORRESPONDING METHOD OF MANUFACTURE

(30) Priorité: 22.12.2016 FR 1663134
(43) Date de publication de la demande: 30.10.2019
(73) Titulaire: Advanced Comfort Systems France SAS - ACS France, 79302 Bressuire Cedex (FR)
(72) Inventeur: JINCHELEAU, Michel, 79320 Moncoutant (FR)
(74) Mandataire: Vidon Brevets & Stratégie
(86) Numéro de dépôt international: PCT/EP2017/084240
(87) Numéro de publication internationale: WO 2018/115365

(56) Documents cités:
- EP-A2- 2 450 209
- WO-A1-2010/022768
- DE-A1-102012 105 375
- FR-A1- 2 893 346
- FR-A1- 2 940 237
- US-A1- 2012 319 434
- US-A1- 2016 023 540

## Description

### 1. Domaine de l'invention

Le domaine de l'invention est celui des véhicules automobiles, et plus précisément des véhicules automobiles équipés d'un pavillon vitré, totalement ou partiellement. Plus particulièrement, l'invention concerne l'occultation de tels pavillons vitrés.

### 2. Art antérieur

Il est connu, depuis maintenant plusieurs années, des véhicules dont le pavillon est totalement ou partiellement vitré. De tels pavillons vitrés présentent de nombreux avantages esthétiques et ergonomiques, en permettant à la lumière de pénétrer largement dans le véhicule, et en permettant à ses occupants de voir vers l'extérieur de ce véhicule.

Des pavillons vitrés sont par exemple décrits dans les documents FR 2 940 237 A1, EP 2 450 209 A2, US 2016/023540 A1 et WO 2010/022768 A1.

Il est cependant souhaitable, dans certains cas, notamment en présence d'un fort soleil, des moyens d'occultation, permettant d'arrêter le passage des rayons du soleil au travers du pavillon. Pour ceci, on peut notamment prévoir des stores d'occultation, comprenant une toile par exemple montée sur un tube enrouleur et pouvant être déplacée d'une position repliée, ou enroulée, vers une position déployée, ou partiellement déployée. L'extrémité libre de la toile porte généralement une barre de tirage, qui permet de contrôler le déplacement de la toile, pour la déployer et la replier. Ce déplacement peut-être, selon les cas, manuel et/ou motorisé.

Une difficulté rencontrée dans la mise en œuvre de ces toiles d'occultation est celle de leur maintien correct, lorsqu'elles sont déployées. La toile doit être tendue et sans pli, tant pour des raisons esthétiques que pour des raisons de fiabilité. En effet, du fait de la grande dimension de la toile, celle-ci a tendance, sous l'effet de la gravité, à se déplacer vers le bas. Ce manque de tenue latérale de la toile peut notamment créer une fuite de lumière.

Pour éviter ce défaut, il a été proposé d'équiper les bords latéraux de la toile d'éléments de guidage, qui se déplacent dans un rail prévu à cet effet, de façon à maintenir la toile tendue entre les deux rails (qui assurent également, généralement, le guidage de la barre de tirage).

Cette approche permet de maintenir la toile tendue dans sa largeur. Une solution connue consiste à maintenir et guider précisément l'élément de guidage dans un rail, en prévoyant au moins deux points de contact permanent entre l'élément de guidage et son rail (ou logement de guidage) pour s'assurer un guidage *a priori* efficace. Un inconvénient de cette approche est qu'elle introduit des frottements importants, qui s'opposent au déploiement ou au repli du store, et peut entraîner des blocages, des décalages, ou autre défaut, pouvant se traduire par des plis sur la toile, voire une détérioration de celle-ci, et, le cas échéant, un blocage du store. Cette solution présente donc des problèmes de fiabilité, et est peu adaptée à une mise en œuvre dans la production de véhicules automobiles où des jeux et des tolérances relativement importants, classiquement de plusieurs millimètres, peuvent exister.

Des problèmes de fiabilité peuvent également apparaître en présence de variations de température, qui peuvent provoquer des dilatations et des variations de longueur des éléments de guidage.

Un autre inconvénient de certaines techniques connues sont que les moyens de guidage sont alors relativement complexes à fabriquer et à mettre en œuvre, du fait de leur forme particulière, et donc coûteux, et relativement encombrants, alors que le domaine de l'automobile requiert d'optimiser l'encombrement, en particulier au niveau du pavillon, pour augmenter le clair de baie.

Il existe donc un besoin fort d'une solution simple, fiable et efficace, peu encombrante et peu coûteuse.

### 3. Caractéristiques principales et optionnelles de l'invention

C'est l'objet de l'invention, qui concerne un dispositif d'occultation pour pavillon de véhicule automobile, comprenant un élément d'occultation guidé entre deux rails de guidage et portant, sur chacun de ses bords latéraux, un élément de guidage et/ou de maintien respectif solidarisé à la face inférieure dudit élément d'occultation et portant au moins deux fils d'armature parallèles en fibres d'aramide.

Ceci permet notamment de garantir l'efficacité et la fiabilité des éléments de guidage et/ou de maintien, et de bloquer l'éventuelle dilatation en température de ceux-ci. Il est à noter que cette approche n'est ni classique, ni évidente, en particulier en termes de fabrication, et notamment lorsque les éléments de guidage et/ou de maintien sont de faible section, ce qui est important pour répondre aux exigences d'encombrement.

Selon l'invention, ledit élément de guidage et/ou de maintien circule dans un logement dudit rail correspondant présentant une fente traversée par ledit élément d'occultation, ledit logement présentant un volume suffisant pour permettre le basculement dudit élément de guidage et/ou de maintien autour d'un axe parallèle audit rail, sur une plage angulaire prédéterminée.

Les inventeurs ont en effet constaté que, contrairement aux *a priori* de l'homme du métier qui cherche généralement à contrôler précisément la position et le déplacement des éléments de guidage et/ou de maintien, en le contraignant en prévoyant plusieurs points de contact, il est souhaitable de conférer un degré de liberté angulaire, dans un plan YZ sensiblement perpendiculaire à l'axe principal des rails (direction de déploiement de la toile, et également axe arrière-avant du véhicule), permettant à ces éléments de guidage et/ou de maintien de basculer librement, sous l'effet de la traction plus ou moins importante de la toile.

La plage angulaire peut par exemple être comprise entre 10 et 20°, l'angle s'ouvrant vers le haut à partir de l'horizontale.

Selon un mode de réalisation particulier, chaque élément de guidage et/ou de maintien comprend deux fils d'armature parallèles.

Selon un mode de réalisation particulier, ledit élément d'occultation comprend une toile d'occultation, dont les bords latéraux portent lesdits éléments de guidage et/ou de maintien.

Selon une variante, adaptée par exemple au cas où la toile n'est pas suffisamment élastique pour assurer un fonctionnement satisfaisant, en tenant compte notamment des possibles jeux, et/ou une absence de plis, ledit élément d'occultation comprend une toile d'occultation, dont les bords latéraux portent une bande de liaison, portant lesdits éléments de guidage et/ou de maintien.

Ainsi, l'élasticité souhaitée peut être assurée par la bande de liaison, ou bande intermédiaire.

Ladite bande de liaison peut être réalisée en polyester et enduite en polyuréthane, et plus généralement tout autre matière permettant l'assemblage avec la toile d'occultation et l'élément de guidage et/ou de maintien.

Selon un mode de réalisation particulier, ladite toile d'occultation est en polyester.

Selon différents modes de réalisation, ledit élément de guidage et/ou de maintien peut être en polyester ou en polyuréthane, et plus généralement en une matière suffisamment glissante pour assurer le déplacement correct requis.

Selon les modes de réalisation, ledit élément de guidage et/ou de maintien peut présenter une largeur comprise entre 3 et 10 mm, de préférence entre 3,5 et 5 mm, par exemple 3,7 mm, et une épaisseur comprise en 1 et 3 mm, par exemple 1,3 mm.

Il est en effet possible, selon l'invention, d'obtenir une section très faible, et donc un encombrement réduit, tout en assurant une bonne efficacité et une bonne fiabilité.

L'invention concerne également les pavillons de véhicule automobile, comprenant un dispositif d'occultation tel que décrit ci-dessus.

L'invention concerne encore un procédé de fabrication d'un dispositif d'occultation tel que décrit ci-dessus. Un tel procédé comprend notamment les étapes suivantes :
- obtention de deux éléments de guidage et/ou de maintien portant au moins deux fils d'armature parallèles en fibres d'aramide ;
- solidarisation desdits éléments de guidage et/ou de maintien à la face inférieure dudit élément d'occultation, sur deux bords latéraux de celui-ci.

Il est à noter que les deux étapes peuvent être mise en œuvre indépendamment l'une de l'autre, dans des unités de production distinctes. En particulier, l'étape d'obtention peut faire l'objet d'une production dédiée, par exemple selon l'approche décrite ci-dessous.

Selon une première approche, ledit élément d'occultation comprend une toile d'occultation, et ladite étape de solidarisation comprend une étape de soudure et/ou de couture desdits éléments de guidage et/ou de maintien aux bords latéraux de ladite toile d'occultation.

Selon une deuxième approche, et par exemple si l'élasticité de la toile d'occultation n'apparaît pas suffisante, ladite étape de solidarisation comprend les étapes de :
- solidarisation à chaque bord latéral de ladite toile d'une bande de liaison ;
- solidarisation d'un desdits éléments de guidage et/ou de maintien à chaque bande de liaison.

Selon un autre aspect, qui peut être mis en œuvre indépendamment, ladite étape d'obtention comprend une étape d'extrusion d'au moins un élément de guidage et/ou de maintien.

L'épaisseur souhaitée (par exemple 1,3 mm) pour les éléments de guidage et/ou de maintien étant très faible, l'extrusion directe de ceux-ci de façon industrielle peut-être malaisée, et peu de fabricants semblent aujourd'hui en mesure de la mettre en œuvre.

Les inventeurs proposent en conséquence une variante de fabrication de tels éléments de guidage et/ou de maintien, selon laquelle ladite étape d'obtention comprend les étapes suivantes :
- extrusion d'un profil présentant une pluralité d'éléments de guidage et/ou de maintien parallèles, reliés par une portion de liaison s'étendant de façon uniforme sur la largeur dudit profil ;
- usinage dudit profil, de façon à retirer ladite portion de liaison et séparer lesdits éléments de guidage et/ou de maintien.

Ainsi, l'extrusion est appliquée à un profil plus large, par exemple d'une largeur de l'ordre de 100 mm et plus épais, par exemple une épaisseur de l'ordre de 2,2 mm. On obtient une bobine, par exemple d'une longueur de 100 m, présentant plusieurs éléments parallèles solidarisés les uns aux autres.

Un usinage est ensuite appliqué, pour supprimer la portion les reliant, de façon à récupérer une série d'éléments à la section souhaitée (par exemple 3,7 mm sur 1,3 mm), qui seront ensuite découpés à la longueur requise, puis solidarisés, directement ou indirectement à la toile d'occultation.

### 4. Liste des figures

D'autres caractéristiques et avantages de l'invention apparaîtront plus clairement à la lecture suivante de la description de deux modes de réalisation particuliers, donnés à titre de simples exemples non limitatifs, et des dessins annexés parmi lesquels :
- la figure 1 illustre un exemple de dispositif d'occultation selon l'invention ;
- la figure 2 est une vue en coupe d'un des rails de la figure 1, selon un premier mode de réalisation de l'invention ;
- la figure 3 est une vue partielle agrandie d'une partie de la figure 2 ;
- la figure 4 illustre un deuxième mode de réalisation de l'invention ;
- la figure 5 illustre un exemple de fabrication d'un élément de guidage et/ou de maintien selon un mode de réalisation de l'invention.

### 5. Description de modes de réalisation particuliers

### 5.1 exemple de dispositif d'occultation

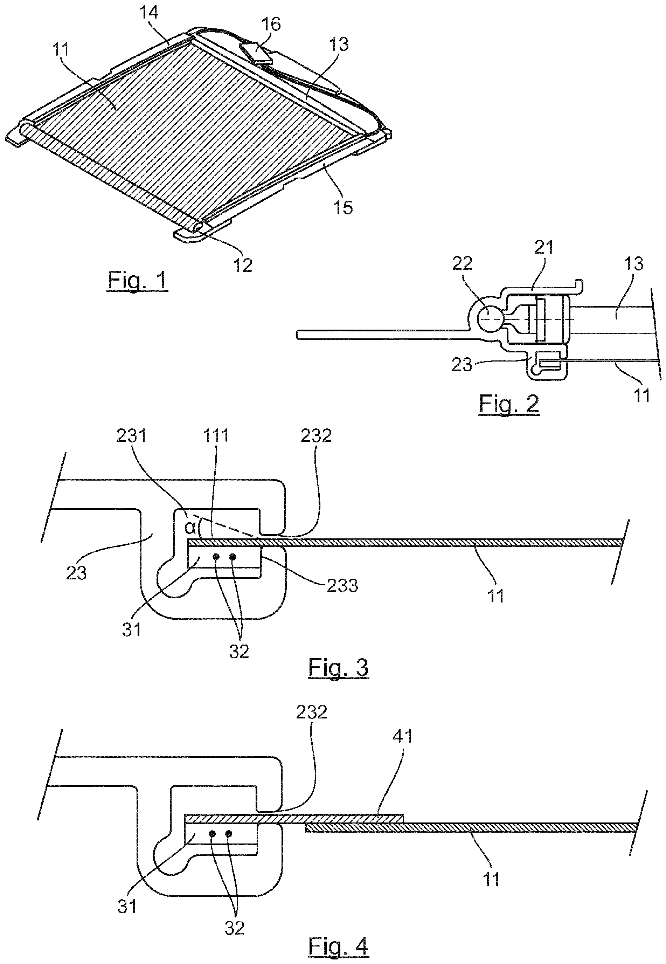

L'invention concerne donc un dispositif d'occultation pour pavillon vitré de véhicule automobile. Un exemple d'un tel dispositif est illustré sur la figure 1. Il comprend une toile d'occultation 11 montée sur un tube enrouleur 12, et pouvant être repliée ou déployée (position déployée illustrée sur la figure 1), pour occulter tout ou partie de la surface d'un pavillon vitré (non représenté).

L'extrémité libre de la toile 11 est solidarisée à une barre de tirage 13, guidée dans deux rails latéraux 14 et 15, qui peuvent notamment être réalisés en aluminium.

Comme expliqué plus en détail par la suite, les bords latéraux de la toile 11 sont guidés dans une portion des rails 14 et 15. Ces rails 14 et 15 assurent également le guidage de la barre de tirage 13, dont le déplacement est assuré, dans le mode de réalisation illustré, par des câbles "push/pull" entraînés par un moteur 16.

### 5.2 premier mode de réalisation

La figure 2 illustre une vue en coupe du rail 14, qui comprend une portion supérieure 21 assurant le guidage de la barre de tirage 13, via le câble "push/pull" 22. Le rail comprend également une portion inférieure 23, assurant le guidage et le maintien de la toile d'occultation 11 selon l'invention.

Cette portion inférieure 23 est illustrée plus précisément sur la figure 3. La toile 11, qui est, par exemple, une toile en polyester porte, à son extrémité latérale 111, un élément de guidage et/ou de maintien 31, également appelé par la suite « guide ».

La portion inférieure 23 du rail comprend un logement 231, présentant une fente 232 dans laquelle peut circuler la toile 11, mais dont l'ouverture ne permet pas le passage du guide 31. Ce guide 31, et la portion d'extrémité latérale 111 de la toile sont donc maintenus dans le logement 231.

Le guide 31 est solidarisé, par exemple par soudure thermique ou par ultra-sons, et/ou par couture, à la face inférieure de l'extrémité 111 de la toile. Sous l'effet de la tension de la toile, le guide 31 est maintenu contre la portion 233 du logement, dont la partie supérieure définit la partie inférieure de la fente 232.

Le logement 231 est défini de façon à permettre un basculement vers le haut du guide 31, sur une plage angulaire prédéterminée α de l'ordre de 10 à 20° par exemple. Ainsi, selon la traction appliquée par la toile 11 selon la direction Y (largeur du véhicule), la position angulaire du guide 31 peut varier, et s'adapter au besoin, notamment en fonction des jeux de montage et de fonctionnement.

Le guide 31 est ici réalisé en polyuréthane ou en polyester, matériaux garantissant de faibles frottements, et donc une bonne efficacité de guidage, lors du déplacement de la toile. Cependant, l'usage d'un tel matériau, de grande longueur (classiquement plus d'un mètre) et de section réduite (dans le mode de réalisation illustré: largeur de l'ordre de 3,7 mm et épaisseur de l'ordre de 1,3 mm) peut-être soumis à des allongements intempestifs, nuisant à la qualité du fonctionnement et à la fiabilité.

Pour cette raison notamment, le guide 31 contient, selon l'invention, plusieurs fils en fibres d'aramide 32 (deux fils dans le mode de réalisation illustré), par exemple, en kevlar (marque déposée).

On peut noter ici que la réalisation d'un tel guide de section réduite et muni d'une armature en fibres d'aramide n'est pas classique (il ne peut notamment pas être obtenu par une simple extrusion classique), et que des méthodes et des outillages spécifiques doivent être développés pour les obtenir, par exemple en produisant une section plus importante, ensuite retaillée, comme proposé par la suite, au paragraphe 5.4.

### 5.3 deuxième mode de réalisation

Selon une variante, illustrée par la figure 4, ce n'est pas la toile 11, par exemple en polyester, qui est reliée directement au guide 31. Une bande intermédiaire 41 est prévue, qui circule dans l'ouverture 232, et est solidarisée d'une part, au guide 31, réalisé ici en polyester et équipé de deux fils en fibres d'aramide 32, et d'autre part, à la toile 11.

Ces solidarisations peuvent notamment être réalisées par soudure thermique, soudure haute fréquence (HF), soudure ultrasons (US), couture...

Cette bande 41 peut notamment être une bande textile enduite en polyuréthane. Une telle bande assure une interface entre le guide et la toile, permettant d'éviter certaines contraintes dues à la rigidité de la toile, et notamment de supprimer, ou à tout le moins réduire de façon efficace, la présence de plis sur cette toile.

Ainsi, si la toile est suffisamment élastique pour l'application envisagée, le premier mode de réalisation peut être mis en œuvre. Si ce n'est pas le cas, l'ajout d'une bande intermédiaire introduisant l'élasticité requise peut être prévue, selon le deuxième mode de réalisation.

### 5.4 obtention d'un élément de guidage et/ou de maintien

Comme indiqué précédemment, les éléments de guidage et/ou de maintien peuvent être obtenus par une extrusion classique, à l'aide d'une filière délivrant un seul profil, d'une section adaptée, par exemple 1,3 mm sur 3,7 mm, par exemple en polyester ou en polyuréthane, et présentant deux (ou plus) fils d'aramide.

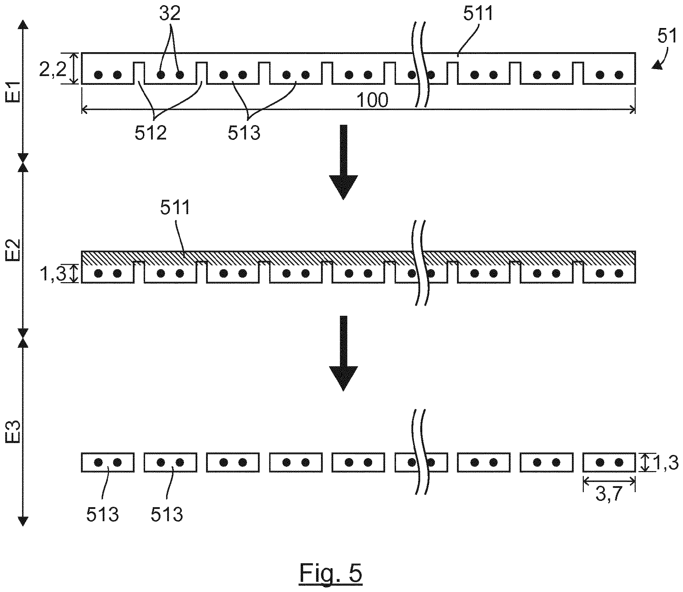

Il a cependant été constaté qu'il était difficile de produire de façon industrielle de tels profils, du fait de leurs faibles dimensions. Les inventeurs ont ainsi proposé une alternative, permettant une fabrication plus aisée. Selon cette approche, illustrée en figure 5, on réalise une extrusion multiple (E1), c'est-à-dire que l'on produit en une seule extrusion une pluralité d'éléments de guidage et/ou de maintien. Il est ainsi possible de mettre en œuvre un profil intermédiaire plus large (par exemple 100 mm) et plus épais (par exemple 2,2 mm), plus aisé à produire selon les techniques actuellement disponibles.

Le profil intermédiaire 51 comprend ainsi une portion de liaison 511, ici la partie supérieure du profil, s'étendant sur toute la largeur de la section, par exemple 100 mm. La portion inférieure présente une série de rainures 512, de quelques 10è de mm, séparant des parties pleines 513, portant chacune deux fils d'aramide 32, et correspondant chacune aux futurs éléments de guidage et/ou de maintien.

L'extrusion permet d'obtenir une bobine selon ce profil, de 100 mm de large et de 100 mètres de long, par exemple.

Dans une deuxième étape (E2), le profil obtenu est usiné, pour supprimer la partie de liaison 511, sur une épaisseur de 0,9 mm (épaisseur totale moins épaisseur souhaitée pour le profil final, soit 2,2-1,3). Les rainures étant sensiblement plus profondes que le profil final, la suppression de cette portion supérieure permet de récupérer directement (E3) une pluralité d'éléments 52 à la section voulue, par exemple 1,3 mm sur 3,7 mm, portant chacun deux fils d'aramide.

L'extrusion selon cette approche peut-être plus lente, du fait que le profil intermédiaire est plus important, mais cette lenteur est compensée par la production en parallèle d'une pluralité de profils finaux.

## Revendications

1. Dispositif d'occultation pour pavillon de véhicule automobile, comprenant un élément d'occultation (11) guidé entre deux rails de guidage (14, 15), dans lequel ledit élément d'occultation (11) porte, sur chacun de ses bords latéraux (111), un élément de guidage et/ou de maintien (31) respectif solidarisé à la face inférieure dudit élément d'occultation et portant au moins deux fils d'armature (32) parallèles, ledit élément de guidage et/ou de maintien (31) circulant dans un logement (231) dudit rail correspondant présentant une fente (232) traversée par ledit élément d'occultation, **caractérisé en ce que** lesdits fils d'armature (32) sont en fibres d'aramide, et **en ce que** ledit logement (231) présente un volume suffisant pour permettre le basculement dudit élément de guidage et/ou de maintien (31) autour d'un axe parallèle audit rail, sur une plage angulaire (α) prédéterminée.

2. Dispositif d'occultation selon la revendication 1, **caractérisé en ce que** ledit élément d'occultation comprend une toile d'occultation (11), dont les bords latéraux (111) portent lesdits éléments de guidage et/ou de maintien (31).

3. Dispositif d'occultation selon la revendication 1, **caractérisé en ce que** ledit élément d'occultation comprend une toile d'occultation (11), dont les bords latéraux portent chacun une bande de liaison (41), portant lesdits éléments de guidage et/ou de maintien (31).

4. Dispositif d'occultation selon la revendication 3, **caractérisé en ce que** ladite bande de liaison (41) est réalisée en polyester et enduite en polyuréthane.

5. Dispositif d'occultation selon l'une quelconque des revendications 2 à 4, **caractérisé en ce que** ladite toile d'occultation (11) est en polyester.

6. Dispositif d'occultation selon l'une quelconque des revendications 1 à 5, **caractérisé en ce que** ledit élément de guidage et/ou de maintien (31) est en polyester ou en polyuréthane.

7. Dispositif d'occultation selon l'une quelconque des revendications 1 à 6, **caractérisé en ce que** ledit élément de guidage et/ou de maintien (31) présente une largeur comprise entre 3 et 10 mm et une épaisseur comprise en 1 et 3 mm.

8. Dispositif d'occultation selon la revendication 7, **caractérisé en ce que** ladite largeur est de 3,7 mm et ladite épaisseur de 1,3 mm.

9. Pavillon de véhicule automobile, comprenant un dispositif d'occultation selon la revendication 1.

10. Procédé de fabrication d'un dispositif d'occultation comprenant un élément d'occultation (11) guidé entre deux rails de guidage (14, 15), **caractérisé en ce qu'**il comprend les étapes suivantes :
- obtention de deux élément de guidage et/ou de maintien (31) portant au moins deux fils d'armature parallèles en fibres d'aramide (32) ;
- fabrication d'un dispositif d'occultation selon l'une quelconque des revendications 1 à 8, comprenant une étape de solidarisation desdits éléments de guidage et/ou de maintien (31) à la face inférieure dudit élément d'occultation (11), respectivement sur deux bords latéraux de celui-ci.

11. Procédé de fabrication selon la revendication 10, **caractérisé en ce que** ledit élément d'occultation comprend une toile d'occultation (11), et **en ce que** ladite étape de solidarisation comprend une étape de soudure et/ou de couture desdits éléments de guidage et/ou de maintien (31) aux bords latéraux (111) de ladite toile d'occultation.

12. Procédé de fabrication selon la revendication 10, **caractérisé en ce que** ledit élément d'occultation comprend une toile d'occultation (11), et **en ce que** ladite étape de solidarisation comprend les étapes de :
- solidarisation à chaque bord latéral de ladite toile d'une bande de liaison (41) ;
- solidarisation d'un desdits éléments de guidage et/ou de maintien (31) à chaque bande de liaison (41).

13. Procédé de fabrication selon l'une quelconque des revendications 10 à 12, **caractérisé en ce que** ladite étape d'obtention comprend une étape d'extrusion d'au moins un élément de guidage et/ou de maintien.

14. Procédé de fabrication selon la revendication 13, **caractérisé en ce que** ladite étape d'obtention comprend les étapes suivantes :
- extrusion d'un profil présentant une pluralité d'éléments de guidage et/ou de maintien parallèles, reliés par une portion de liaison s'étendant de façon uniforme sur la largeur dudit profil ;
- usinage dudit profil, de façon à retirer ladite portion de liaison et séparer lesdits éléments de guidage et/ou de maintien.

15. Procédé de fabrication selon la revendication 14, **caractérisé en ce que** ledit profil présente une largeur de l'ordre de 100 mm et une épaisseur de l'ordre de 2,2 mm.

## Patentansprüche

1. Vorrichtung zur Verdunklung für das Dache eines Kraftfahrzeugs, umfassend ein Verdunklungselement (11), das zwischen zwei Führungsschienen (14, 15) geführt wird, wobei das Verdunklungselement (11) an jedem seiner Seitenränder (111) ein jeweiliges Führungs- und/oder Halteelement (31) trägt, das mit der Unterseite des Verdunklungselements verbunden ist und mindestens zwei parallele Bewehrungsdrähte (32) trägt, wobei das Führungs- und/oder Halteelement (31) in einer Aufnahme (231) der entsprechenden Schiene umläuft, die einen Schlitz (232) aufweist, durch den das Verdunklungselement hindurchgeht, **dadurch gekennzeichnet, dass** die Bewehrungsdrähte (32) aus Aramidfasern sind, und dass die Aufnahme (231) ein ausreichendes Volumen aufweist, um das Kippen des Führungs- und/oder Halteelements (31) um eine Achse parallel zur Schiene in einem vorbestimmten Winkelbereich (α) zu ermöglichen.

2. Verdunklungsvorrichtung nach Anspruch 1, **dadurch gekennzeichnet, dass** das Verdunklungselement eine Verdunklungsblende (11) umfasst, deren Seitenränder (111) die Führungs- und/oder Halteelemente (31) tragen.

3. Verdunklungsvorrichtung nach Anspruch 1, **dadurch gekennzeichnet, dass** das Verdunklungselement eine Verdunklungsblende (11) umfasst, deren Seitenränder jeweils eine Verbindungsleiste (41) tragen, die die Führungs- und/oder Halteelemente (31) trägt.

4. Verdunklungsvorrichtung nach Anspruch 3, **dadurch gekennzeichnet, dass** die Verbindungsleiste (41) aus Polyester hergestellt und mit Polyurethan beschichtet ist.

5. Verdunklungsvorrichtung nach einem der Ansprüche 2 bis 4, **dadurch gekennzeichnet, dass** die Verdunklungsblende (11) aus Polyester ist.

6. Verdunklungsvorrichtung nach einem der Ansprüche 1 bis 5, **dadurch gekennzeichnet, dass** das Führungs- und/oder Halteelement (31) aus Polyester oder aus Polyurethan ist.

7. Verdunklungsvorrichtung nach einem der Ansprüche 1 bis 6, **dadurch gekennzeichnet, dass** das Führungs- und/oder Halteelement (31) eine Breite zwischen 3 und 10 mm und eine Dicke zwischen 1 und 3 mm aufweist.

8. Verdunklungsvorrichtung nach Anspruch 7, **dadurch gekennzeichnet, dass** die Breite 3,7 mm und die Dicke 1,3 mm beträgt.

9. Kraftfahrzeugdach, umfassend eine Verdunklungsvorrichtung nach Anspruch 1.

10. Verfahren zur Herstellung einer Verdunklungsvorrichtung, umfassend ein Verdunklungselement (11), das zwischen zwei Führungsschienen (14, 15) geführt wird, **dadurch gekennzeichnet, dass** es die folgenden Schritte umfasst:
- Herstellen von zwei Führungs- und/oder Halteelementen (31), die mindestens zwei parallele Bewehrungsdrähte aus Aramidfasern (32) tragen;
- Herstellen einer Verdunklungsvorrichtung nach einem der Ansprüche 1 bis 8, umfassend einen Schritt des Verbindens der Führungs- und/oder Halteelemente (31) mit der Unterseite des Verdunklungselements (11) bzw. mit den zwei Seitenrändern desselben.

11. Herstellungsverfahren nach Anspruch 10, **dadurch gekennzeichnet, dass** das Verdunklungselement eine Verdunklungsblende (11) umfasst, und dass der Verbindungsschritt einen Schritt des Schweißens und/oder Nähens der Führungs- und/oder Halteelemente (31) an die Seitenränder (111) der Verdunklungsblende umfasst.

12. Herstellungsverfahren nach Anspruch 10, **dadurch gekennzeichnet, dass** das Verdunklungselement eine Verdunklungsblende (11) umfasst, und dass der Verbindungsschritt die folgenden Schritte umfasst:
- Verbinden einer Verbindungsleiste (41) mit jedem Seitenrand der Blende;
- Verbinden eines der Führungs- und/oder Halteelemente (31) mit jeder Verbindungsleiste (41).

13. Herstellungsverfahren nach einem der Ansprüche 10 bis 12, **dadurch gekennzeichnet, dass** der Herstellungsschritt einen Schritt der Extrusion mindestens eines Führungs- und/oder Halteelements umfasst.

14. Herstellungsverfahren nach Anspruch 13, **dadurch gekennzeichnet, dass** der Herstellungsschritt die folgenden Schritte umfasst:
- Extrusion eines Profils, das eine Vielzahl von parallelen Führungs- und/oder Halteelementen aufweist, die durch einen Verbindungsabschnitt verbunden sind, der sich gleichmäßig über die Breite des Profils erstreckt;
- Bearbeiten des Profils, um den Verbindungsabschnitt zu entfernen und die Führungs- und/oder Halteelemente zu trennen.

15. Herstellungsverfahren nach Anspruch 14, **dadurch gekennzeichnet, dass** das Profil eine Breite von ungefähr 100 mm und eine Dicke von ungefähr 2,2 mm aufweist.

## Claims

1. Shading device for a motor vehicle roof, comprising a shading element (11) guided between two guide rails (14, 15) in which said shading element (11) carries, on each of its lateral edges (111), a respective guiding and/or retaining element (31) attached to the underside of said shading element and carrying at least two parallel reinforcing threads (32), said guiding and/or retaining element (31) running in a housing (231) of said corresponding rail having a slot (232) through which said shading element passes, **characterised in that** said reinforcing threads (32) are aramid fibres, and **in that** said housing (231) has enough volume to allow said guiding and/or retaining element (31) to pivot about an axis parallel to said rail, over a predetermined angular range (α).

2. Shading device according to claim 1, **characterised in that** said shading element comprises a shading sheet (11), the lateral edges (111) of which carry said guiding and/or retaining elements (31).

3. Shading device according to claim 1, **characterised in that** said shading element comprises a shading sheet (11), the lateral edges of which each carry a connecting strip (41), carrying said guiding and/or retaining elements (31).

4. Shading device according to claim 3, **characterised in that** said connecting strip (41) is made of polyester and coated with polyurethane.

5. Shading device according to any one of claims 2 to 4, **characterised in that** said shading sheet (11) is made of polyester.

6. Shading device according to any one of claims 1 to 5, **characterised in that** said guiding and/or retaining element (31) is made of polyester or polyurethane.

7. Shading device according to any one of claims 1 to 6, **characterised in that** said guiding and/or retaining element (31) has a width of between 3 and 10 mm and a thickness of between 1 and 3 mm.

8. Shading device according to claim 7, **characterised in that** said width is 3.7 mm and said thickness is 1.3 mm.

9. Motor vehicle roof comprising a shading device according to claim 1.

10. Method for manufacturing a shading device comprising a shading element (11) guided between two guide rails (14, 15), **characterised in that** it comprises the following steps:
- obtaining two guiding and/or retaining elements (31) carrying at least two parallel reinforcing threads made of aramid fibres (32);
- manufacturing a shading device according to any one of claims 1 to 8, comprising a step of securing said guiding and/or retaining elements (31) to the underside of said shading element (11), respectively on two lateral edges thereof.

11. Manufacturing method according to claim 10, **characterised in that** said shading element comprises a shading sheet (11), and **in that** said securing step comprises a step of welding and/or sewing said guiding and/or retaining elements (31) to the lateral edges (111) of said shading sheet.

12. Manufacturing method according to claim 10, **characterised in that** said shading element comprises a shading sheet (11), and **in that** said securing step comprises the steps of:
- attaching to each lateral edge of said sheet of a connecting strip (41);
- attaching of one of said guiding and/or retaining elements (31) to each connecting strip (41).

13. Manufacturing method according to any one of claims 10 to 12, **characterised in that** said obtaining step comprises a step of extrusion of at least one guiding and/or retaining element.

14. Manufacturing method according to claim 13, **characterised in that** said obtaining step comprises the following steps:
- extruding a profile having a plurality of parallel guiding and/or retaining elements connected by a connecting portion extending uniformly over the width of said profile;
- machining of said profile, so as to remove said connecting portion and to separate said guiding and/or retaining elements.

15. Manufacturing method according to claim 14, **characterised in that** said profile has a width of the order of 100 mm and a thickness of the order of 2.2 mm.
